# EUROPÄISCHE PATENTSCHRIFT

(11) **EP 1 211 770 B1**
(45) Veröffentlichungstag und Bekanntmachung des Hinweises auf die Patenterteilung: **10.09.2008**
(21) Anmeldenummer: 01811171.6
(22) Anmeldetag: 03.12.2001
(51) Int. Cl.: H02B 1/30, H02G 3/04

(54) **Pfostenprofil**
Transom profile
Traverse profilée

(30) Priorität: 04.12.2000 CH 23482000
(43) Veröffentlichungstag der Anmeldung: 05.06.2002
(73) Patentinhaber: Gantenbein, Ulrich, 9472 Grabs (CH)
(72) Erfinder: Gantenbein, Ulrich, 9472 Grabs (CH)
(74) Vertreter: Walder, Martin Bernhard

(56) Entgegenhaltungen:
- Keine einschlägigen Dokumente gefunden

## Beschreibung

### Technisches Gebiet der Erfindung

Die Erfindung betrifft ein Pfostenprofil für mit Querstegen zu verbindende Pfosten, insbesondere für Installationsgerüste in der Haustechnik, gemäss dem Oberbegriff des Anspruchs 1, sowie einen Satz von Pfostenprofilen gemäss dem Oberbegriff des Anspruchs 12.

### Stand der Technik

Aus der DE -41 11 403 C1 ist ein Schaltschrank mit Rahmengestell und Schrankfächern bekannt. Das Rahmengestell besteht aus vier vertikalen Rahmenschenkeln. Diese tragen auf zwei senkrecht zueinander stehenden Innenkantenseiten je eine Reihe von Durchbrüchen in vorgegebener Teilung. In diesen Durchbrüchen werden jeweils Verbindungsschienen befestigt, welche zwei Rahmenschenkel verbinden. Diese Verbindungsschienen dienen zur Aufnahme von Horizontal- und Vertikalplatten, welche zusammen ein Schrankfach bilden.

Beim Aufstellen von Schranksystemen mit Lochungen in den Pfosten müssen diese Lochungen im Niveau aufeinander abgestimmt werden, da ansonsten alle in dieser

Lochung befestigten Verbindungsstreben und Tablare etc nicht horizontal montiert werden können. Deshalb ist beispielsweise aus der EP 0 795 943 A1 bekannt, dass beim Aufbau eines Installationsschrankes zuerst ein Fussteil unter Zuhilfenahme einer Wasserwaage am Fussboden befestigt wird. Auf Verbindungsglieder am Fussteil werden dann die Pfosten gestellt, unter Zuhilfenahme einer Wasserwaage senkrecht gerichtet und anschliessend mit höhenverstellbaren Deckenanschlussgliedern an der Decke fixiert. Nachteilig an einem solchen Schranksystem ist, dass ein Fussteil benötigt wird, welches horizontal befestigt werden muss. Das Fussteil muss dazu z.B. mit Schiftkeilen geschiftet und dann am Boden festgeschraubt werden. Ein solches Ausrichten des Fussteils ist zeitlich aufwändig. Eine schlechte Ausrichtung des Fussteils bewirkt, dass die Lochungen in den Pfosten insgesamt schlecht ausgerichtet sind.

Zudem müssen beim Zuschneiden von gelochten Pfosten jeweils zwei Schnitte ausgeführt werden. Mit einem ersten Schnitte muss gewährleistet sein, dass die Lochung in einem definierten Abstand zum abzustellenden Pfostenende angeordnet ist, damit die Löcher der Lochreihen verschiedener Pfosten jeweils gleiche Abstände vom Fussteil aufweisen. Mit dem zweiten Schnitt wird der Pfosten entsprechend dem Raummass abgelängt. Wird der zweite Schnitt so ausgeführt, dass er als erster Schnitt für den nächsten vom Profil abzuschneidenden Pfosten gilt, so müssen die Massunterschiede zwischen Pfostenhöhe und Raumhöhe durch ein teleskopisch ausziehbares Deckenanschlussteil ausgeglichen werden.

Aus der DE-U-92 07 806.0 ist ein Hohlprofil bekannt, das insbesondere zum Aufbau von modularen Schranksystemen, Pult- und Tischeinheiten geeignet ist. Dieses besitzt eine Hohlkammer, die von abgewinkelten Profilseiten umgeben ist. Ferner sind Befestigungsöffnungen und ein Dichtsteg vorhanden. Bei diesem Hohlprofil ist wendigstens eine T-Nut zur Aufnahme von Befestigungselementen und/ oder individuellen Einbauten von abgewinkelten Profilseiten gebildet. Jede Nut bildet dabei einen vertikalen Schlitz in einem Nutschenkel, der fluchtend oder parallel mit einer Seite der Hohlkammer verläuft.

Aus der US-A-5,782,441 ist ein Kabelhalterahmen bekannt. Der Rahmenkörper des Kabelhalterahmens ist aus vertikalen Pfosten und dazwischen horizontalen Stegen gebildet. Die Stege sind mittels durch die Pfosten hindurchreichenden Bolzen zwischen den Pfosten befestigt. An den Pfosten sind hakenförmige Längsnuten ausgebildet, in die ein Halteprofil eingreift. Das Halteprofil ist mit einer gegen den Pfosten pressenden Schraube im Halteprofil in die Längsnuten gepresst.

### Aufgabe der Erfindung

Es ist Aufgabe der Erfindung, ein Pfostenprofil zu schaffen, welches eine äusserst einfache Montage von Steigzonenanlagen auf der Baustelle erlaubt. Insbesondere soll eine höhenmässige Schiftung von Pfosten aus diesem Pfostenprofil hinfällig werden. Es sollen damit Installationsgerüste hergestellt und zu Schränken oder Kanälen abgeschlossen werden können. Der Abschluss einzelner Abteile der Schränke soll mit Trennwänden zwischen den Pfosten erfolgen können. Es sollen einzelne, wählbare Seiten oder auch alle Seiten ohne Trennwand offen bleiben können. Das Pfostenprofil soll eine im Raum freistehende Montage von Installationsschränken und -schächten erlauben. Die Montage dieses Installationsgerüsts soll unabhängig vom übrigen Bauablauf, z.B. bereits im Rohbau I, ausgeführt werden können. Die Montage soll derart einfach sein, dass sie vom Installateur ausgeführt werden kann.

### Beschreibung der Erfindung

Diese Aufgabe wird durch das Kennzeichen des Anspruchs 1 bzw. 12 gelöst. Entsprechend sind in einem Pfostenprofil für tragende Pfosten wenigstens eine erste und eine zweite Befestigungsleiste parallel zur Profillängsachse ausgebildet. Diese Befestigungsleisten weisen je eine Befestigungsseite auf. Ein Quersteg ist an dieser Befestigungsseite an verschiedenen Positionen mit einem Befestigungsmittel befestigbar und daher parallel zur Profillängsachse verstellbar. Eine Senkrechte zur Befestigungsseite ist quer zur Längsrichtung des Querstegs und quer zur Profillängsachse gerichtet. Zueinander stehen die Befestigungsseiten in einem 360° ganzzahlig teilenden Winkel, insbesondere 90 Grad.

Erfindungsgemäss erlauben bei einem solchen Pfostenprofil die Befestigungsleisten, z.B. indem sie in Form einer C-Nut oder einer T-Rippe ausgebildet sind, eine parallel zur Profillängsachse stufenlos verstellbare Klemmbefestigung. Dank dieser stufenlosen Verstellbarkeit der Querstege, müssen die Pfosten nicht auf gleichem Niveau montiert werden, sondern müssen lediglich senkrecht gestellt werden. Erfindungsgemäss ist zudem parallel zu den Befestigungsleisten je ein Stirnanschlag zum Anschlagen einer Stirnseite des Querstegs ausgebildet. Dieser Stirnanschlag steht über die Befestigungsseite der Befestigungsleiste vor. Dies erlaubt eine winkelsteife Befestigung von Querstegen an den Pfostenprofilen mit nur einer punktuellen Befestigung, z.B. indem eine Schraube durch ein Loch im Quersteg hindurch in einem Klemmstück in der C-Nut-förmigen Befestigungsleiste festgezogen wird. Die winkelsteife Verbindung zwischen Quersteg und

Pfostenprofil erlaubt den Bau von wandlosen Installationsgerüsten, die unabhängig von Bauablauf und im Raum frei aufstellbar sind.

Als Querstege sind wenigstens ein Breitensteg unten (Sockel) und ein Breitensteg oben (Sturz) vorgesehen. Mit diesen Breitenstegen und Pfosten können ganze Fronten, z.B. Türfronten, erstellt werden. Mit zusätzlichen Tiefenstegen, jeweils wieder wenigstens einem unten und einem oben und damit verbundenen Pfosten können Installationsgerüste für Schränke und Schächte in Nischen oder freistehend erstellt werden. Die Breitenstege und Tiefenstege weisen vorteilhaft Lochungen auf, an denen Installationen befestigt werden können. Vorteilhaft werden zusätzlich Befestigungsprofile für eine Installationsbefestigung als Querstege verwendet. Dadurch sind die wandlosen Installationsgerüste sofort installationsbereit. Ein für Querstege bevorzugtes Befestigungsprofil ist in der EP-B-0 555 187 beschrieben.

Am Pfostenprofil ist vorteilhaft wenigstens eine Einstecknut zum Einstecken einer Trennwand in das Pfostenprofil ausgebildet. Die Einstecknut ist dabei zweckmässigerweise derart ausgerichtet, dass eine darin eingesteckte Trennwand parallel zu einem an einer Befestigungsleiste befestigten Quersteg verläuft. Dank solchen Einstecknuten müssen Trennwände lediglich in die Profile gesteckt werden. Für das Anbringen einer Trennwand sind keine Schrauben oder Nieten notwendig. Die Steifigkeit des Installationsgerüsts ist durch die Verbindung zwischen Quersteg und Pfosten gegeben, so dass die Trennwände dazu nicht notwendig sind. Sie können dort eingefügt werden, wo sie aus anderen Gründen, z.B. Bereichstrennung, Abschottung, zweckmässig sind. Die Trennwände sind zweckmässigerweise dort weggelassen, wo Installationen wie Kabel oder Rohre aus dem Installationsgerüst hinausführen oder wo eine Gebäudewand vorhanden ist. So können Ausschnitte für Leitungsdurchführungen in den Trennwänden vermieden werden. Die Einstecknut ist vorteilhaft auf der der Befestigungsseite gegenüberliegenden Seite der Befestigungsleiste in direkter Nachbarschaft zu dieser angeordnet

Im Profilquerschnitt ist vorteilhaft eine Öffnung vorgesehen, welche zum Einstecken eines Flacheisens in Profillängsrichtung in ein Profilende dimensioniert ist. Da auf der Baustelle keine Höhenjustierung der Profilpfosten mehr notwendig ist, erlaubt diese Öffnung die Verwendung von einfachen Flacheisen oder Flacheisenwinkeln zur Befestigung der Pfosten an einem Boden und an einer Decke. Die Öffnung ist zweckmässigerweise derart dimensioniert, dass das Flacheisen darin verschiebbar ist, jedoch in jeder Verschiebeposition darin klemmt. Daher muss das Flacheisen bei der Montage eines Pfostens nicht in der richtigen Position gehalten werden, so dass ein Arbeiter allein einen Pfosten stellen, senkrecht ausrichten und in dieser Position befestigen kann. Kleinere Ungenauigkeiten können in der Regel zumindest am oberen Ende eines Pfostens durch Verbiegen des Flacheisens korrigiert werden. Eine solche Befestigung der Pfosten begünstigt eine freistehende Montage. Wände sind für die Stabilität der aus den Pfosten und Querstegen gebildeten Installationsgerüste nicht erforderlich.

Es sind verschiedene Formen der Befestigungsleiste möglich, welche alle eine stufenlose Verschiebung von Querstegen und anderen daran befestigten Teilen erlauben. Die Befestigungsleiste ist dabei immer ein parallel zur Profillängsachse kontinuierliches, gleichbleibendes Profil. Daher werden solche Pfostenprofile vorteilhaft aus stranggepresstem Aluminium hergestellt. Ein nachträgliches Lochen erübrigt sich.

Bevorzugt wird eine Befestigungsleiste, welche durch eine C-förmige Nut gebildet ist. Handelsübliche Klemmstücke sind in C-Nuten einsteckbar und darin festklemmbar. Dazu weist eine C-Nut zwei Auflager für daran zu befestigende Teile auf, was eine winkelsteife Verbindung und eine grosse Reibung zwischen dem Pfosten und diesem Teil sicherstellt.

Bei Pfostenprofilen für Pfosten, welche bei einem Installationsgerüst hinten, das heisst von der späteren Front- oder Zugangsseite entfernt, angeordnet sind, ist vorteilhaft zwischen zwei Befestigungsleisten eine Winkelwand ausgebildet. Diese bildet mit ihrer konvexen Seite Stirnanschläge für an diesen Befestigungsleisten befestigte Querstege und versteift das Profil gleichzeitig. Die Breite der Stirnanschläge beziehungsweise der Abstand der Stirnanschläge von der anderen Befestigungsleiste ist auf die Tiefe der Quersteg-Profile abgestimmt. Dadurch lassen sich zwei Querstege auf gleicher Höhe in den beiden Befestigungsleisten an einem Pfosten befestigen. Auf der konvexen Seite der Winkelwand sind daher die Befestigungsleisten angeordnet, wobei deren Befestigungsseite jeweils senkrecht zum angrenzenden Schenkel der Winkelwand steht. Auf der konkaven Seite der Winkelwand kann die Öffnung zum Einstecken des Flacheisens für das Auge des Betrachters nach der Montage durch die Winkelwand verdeckt ausgebildet sein.

Bei Pfostenprofilen für Pfosten auf der Frontseite eines Installationsgerüsts bildet ein frontseitiger Profilteil den Stirnanschlag für einen an einer frontseitigen Befestigungsleiste befestigten Quersteg. Solche Querstege sind insbesondere ein Sockel- und ein Sturzelement, welche die Breite des Installationsgerüsts bestimmen und daher auch Breitenstege genannt werden. Der andere Stirnanschlag ist auf der der Befestigungsseite gegenüberliegenden Seite dieser frontseitigen Befestigungsleiste ausgebildet. Eine erste Befestigungsleiste ist am Profil derart angeordnet, dass ihre Befestigungsseite von der Schrankfront her zugänglich ist. Sie dient der Befestigung von Einbauelementen wie Sicherungskästen, Verteilerkästen und anderen Einsätzen. Die zweite Befestigungsleiste ist im Schrankinnern angeordnet. Der Anschlag für von der Front her zu befestigende Breitenstege ist durch einen Profilteil gebildet, der zur Frontseite hin vorsteht. Dieser Profilteil ist vorteilhaft ein geschossenes Hohlprofil. Dieses verschafft dem Pfostenprofil eine hohe Biegesteifigkeit und bildet einen sichtbaren Träger für Türelemente zwischen zwei solchen Pfosten.

Solche Pfostenprofile für Pfosten in Schrank- oder Kanalfronten können asymmetrisch ausgebildet sein. Ein asymmetrischer Pfosten ist für Eckpfosten geeignet. Dabei ist ein linker und rechter Eckpfosten aus dem gleichen Profil herstellbar, weil das Profil keine vorgegebene Richtung bezüglich oben und unten aufweist. Im den Anschlag für von der Frontseite her zu befestigende Breitenstege bildenden Teil des Profils ist vorteilhaft eine Einschraubnut ausgebildet. Darin sind insbesondere seitliche Verkleidungswände festschraubbar.

Das Profil kann aber auch symmetrisch ausgebildet sein, so dass der einen Anschlag für von der Frontseite her anzuschlagende Teile bildende Profilteil auf der Symmetrieebene liegt und zu seinen beiden Seiten einen solchen Anschlag bildet. Ein Pfosten aus einem solchen symmetrischen Profil hat beidseitig am vorstehenden Profilteil eine Befestigungsleiste und ist dazu geeignet, als Mittelpfosten zwischen zwei benachbarten Schrank- oder Kanaltüren angeordnet zu werden. Eine Verkleidung des auf der Symmetrieachse liegenden Pfostenteils kann durch ein aufsteckbares Profil erreicht werden.

Mit Vorteil ist am Pfostenprofil für Frontpfosten zwischen der frontseitigen Befestigungsleiste und dem durch das frontseitige Profilteil gebildeten Anschlag eine Nut für ein Dichtungsprofil ausgebildet. Diese erlaubt das Einstecken einer Gummidichtung und damit eine weitgehend luft-, geruchs- und staubdichte Abdichtung einer Schranktür oder Kanalfront.

Bei Profilen für Eckpfosten, sei dies für Eckpfosten an der Front oder am Kanalgrund, ist wenigstens eine Einstecknut für eine Trennwand peripher am Profil ausgebildet. Bei einem spiegelsymmetrisch ausgebildeten Profil ist eine Einstecknut zweckmässigerweise auf der Symmetrieebene ausgebildet.

Diese Einstecknut ist parallel zur Befestigungsseite der Befestigungsleiste für die Tiefe des Installationsgerüsts bestimmende Querstege ausgerichtet und erlaubt dadurch das Einstecken von senkrecht zu der Schrank- oder Kanalfront gerichteten Trennwänden hinter diesen Querstegen. Die Trennwände können je nach Situation als äussere Schrankwände oder als innere Trennwände eingefügt werden. Damit eine solche eingesteckte Trennwand nicht in den Nuten nach unten absinkt, kann unten ein winkelförmiger Quersteg oder ein Winkelprofil am Quersteg befestigt werden, wobei ein Schenkel des Querstegs oder Winkelprofils die Ebene der Trennwand quert. Die Trennwand steht in der Folge auf diesem Schenkel.

Bei einem Pfostenprofil-Satz mit wenigsten zwei unterschiedlichen Profilen, mit jeweils darin ausgebildet einer ersten und einer zweiten Befestigungsleiste, welche Befestigungsleisten je eine Befestigungsseite aufweisen und mit einem Befestigungsmittel eine parallel zur Profillängsachse verstellbare Befestigung eines Querstegs an dieser Befestigungsseite erlauben, wobei die Befestigungsseiten quer zur Längsrichtung des Querstegs und quer zur Profillängsachse gerichtet sind und in einem 360° ganzzahlig teilenden Winkel, insbesondere 90 Grad, zueinander stehen, erlauben die Befestigungsleisten erfindungsgemäss eine parallel zur Profillängsachse stufenlos verstellbare Klemmbefestigung und ist parallel zu den Befestigungsleisten je ein Stirnanschlag zum Anschlagen einer Stirnseite eines Querstegs ausgebildet. Dabei bildet ein frontseitiger Profilteil den Stirnanschlag für einen an einer frontseitigen Befestigungsleiste befestigten Quersteg, insbesondere für ein Sockel- und ein Sturzelement, und ist der andere Stirnanschlag auf der der Befestigungsseite gegenüberliegenden Seite dieser frontseitigen Befestigungsleiste ausgebildet. Bei einem ersten asymmetrischen Profil ist lediglich einseitig am frontseitigen Stirnanschlag bildenden Profilteil eine zur Frontseite gerichtete Befestigungsleiste ausgebildet, bei einem zweiten Profil sind beidseitig daran symmetrisch zwei solche Befestigungsleisten ausgebildet. Mit diesem Profilsatz lassen sich Fronten mit mehreren Feldern herstellen. Es können mit diesen zwei Profilen auch Schränke und Kanäle mit Seiten- und Rückenteilen hergestellt werden, welche Schränke oder Kanäle zwei gegenüberliegende Fronten aufweisen und daher von zwei gegenüberliegenden Seiten zugänglich sein können.

Sollen Installationsgerüste mit lediglich von einer Front her zugänglichen Seiten- und von der Innenseite her zugänglichen Rückenteilen hergestellt werden können, werden dazu zwei weitere Profile benötigt. Nämlich ein drittes Profil für den hinteren Eckpfosten und ein viertes Profil für den hinteren Zwischenpfosten. Beim dritten Profil ist zwischen zwei Befestigungsleisten eine Winkelwand ausgebildet, welche mit ihrer konvexen Seite Stirnanschläge für an diesen Befestigungsleisten befestigte Querstege bildet. Beim vierten Profil ist zusätzlich eine dritte und eine vierte Befestigungsleiste vorgesehen, welche spiegelsymmetrisch zu den ersten zwei Befestigungsleisten angeordnet sind. Die beiden mittleren Befestigungsleisten legen Rücken zu Rücken aneinander. Eine Einstecknut für eine Trennwand im Bereich der Zwischenpfosten ist vorteilhaft auf der Symmetrieachse ausgebildet und seitlich auf die Befestigungsleisten aufgesetzt.

Die Erfindung betrifft auch Pfosten mit einer gewählten Pfostenhöhe aus einem erfindungsgemässen Pfostenprofil. Die Pfostenhöhe des Pfostens ist insbesondere auf eine Raumhöhe in einem Bauwerk mit wenigstens einem Geschoss abgestimmt. Unter Raumhöhe wird in den meisten Fällen die Raumhöhe vom tragenden rohen Boden ohne Überzug oder Unterlagsboden bis zur rohen Decke verstanden, denn solche Installationsgerüste sollen in aller Regel am Rohbau montiert und erst nach fertiger Installation mit Verkleidungselementen und Türen oder Abdeckungen versehen werden. Der Pfosten kann aus einem Stück gefertigt sein, oder aber aus zwei Stücken zusammengesetzt sein. Das Zusammensetzen von Pfosten hat den Vorteil, dass Profilabschnitte, die beim Ablängen der Pfosten entstehen, jeweils für den nächsten Pfosten verwendet werden können. Dadurch können Abschnittverluste minimiert und die Profile in einer für den Transport praktischen Grundlänge von z.B. 3m bezogen werden.

Ein Bausatz besteht daher aus einem erwähnten Pfostenprofilsatz, Profilen zur Herstellung von Querstegen und Befestigungsmitteln zur Befestigung der Querstege an den Pfosten. Als Profile zur Herstellung von Querstegen kommen neben den in der EP-B-0 555 187 beschrieben in erster Linie nachstehend beschriebene in Frage. Die Breite und die Tiefe eines Installationsgerüsts bestimmende Querstege für den Sockel- und

Sturzbereich bestehen vorteilhaft aus einem rechtwinklig abgekanteten, C-förmigen Blechprofil, das mit einem Rechteck-Lochraster versehen ist. Der Rechteck-Lochraster erlaubt die Verwendung von Käfigmuttern. Vorteilhaft ist ein zweiter Rund-Lochraster vorgesehen, der die direkte Befestigung von gewindeschneidenden Blechschrauben am Quersteg erlaubt. Diese Lochungen sind in das Blech des Profils eingestanzt.

Ein solcher Bausatz besteht vorteilhaft aus wenigstens 2 bereits bestimmungsgemäss abgelängten Pfosten und wenigstens einem oberen und einem unteren Quersteg. Der Bausatz für ein Installationsgerüst kann aus 4 abgelängten Pfosten, 4 Breitenstegen und 4 Tiefenstegen bestehen. Bei mehrfeldrigen Schränken oder Kanälen sind entsprechende Anzahlen von Pfosten und Querstegen vorgesehen. Optional können auch auf Mass zugeschnittene Trennwände, insbesondere zum Einstecken in die Pfostenprofile, dabei sein.

Bei einem Bausatz für fertige Schrankteile oder Kanalteile ist wenigstens ein Verschlusselement, insbesondere eine in montiertem Zustand verschwenkbare Türe, zum weitgehenden Abschliessen einer zwischen zwei Pfosten aus für eine Front bestimmten Pfostenprofilen gebildeten Öffnung enthalten.

Beansprucht wird auch ein Medienkanal in einem Gebäude, welcher wenigstens auf einer Seite durch wenigstens zwei Pfosten und wenigstens ein Verschlusselement zwischen den beiden Pfosten verschlossen ist, falls die Pfosten aus einem erfindungsgemässen Pfostenprofil gebildet sind. Unter Medienkanal wird eine über mindestens eine mit entfernbaren Verschlusselementen verschlossene Seite zugängliche Installationsnische, insbesondere ein solcher Installationsschacht verstanden. Die Verschlusselemente können Türen sein, so dass auch von einem Medienschrank die Rede sein kann. Installationsschächte sind gewöhnlich über mehr als ein Geschoss durchgehend. Unter Medienkanal wird hier jedoch auch ein Schrank verstanden, welcher für Installationen wie Feuerlöschposten, Heizungsverteilung, Sicherungskästen, Datenverarbeitungsgeräte etc. vorgesehen ist, und nicht Teil eines durchgehenden Installationsschachtes im eigentlichen Sinn ist. Insbesondere wird die Verwendung eines Pfostens aus einem erfindungsgemässen Pfostenprofil in einem Traggerüst eines Medienkanals beansprucht.

Die Pfostenprofile erlauben auch ein vorteilhaftes Verfahren zum Aufbauen eines Medienkanals. Bei diesem Verfahren werden Pfosten entsprechend der lichten Geschosshöhe von einem Profil abgelängt, in die Pfostenenden Pfostenhalter eingeschoben, ein erster Pfosten in die gewünschte Position gebracht und seine Pfostenhalter an Boden und Decke befestigt. Anschliessend werden Querstege mit ihren Enden an den befestigten und einen zu diesem benachbarten Pfosten befestigt und die Pfostenhalter dieses benachbarten Pfostens nach dem Parallelrichten des Pfostens an Boden und Decke befestigt. Insbesondere werden erst danach die Querstege in den Befestigungsleisten an die vorgesehene Stelle verschoben und dort fixiert.

### Kurzbeschreibung der Figuren

In den Figuren sind Ausführungsbeispiele der erfindungsgemässen Pfostenprofile und von deren Anwendung dargestellt. Es zeigt:
Fig. 1 einen Querschnitt durch ein Pfostenprofil für einen Randpfosten einer Front mit Verkleidungsteilen, seitlicher Trennwand, Quersteg und Türe,
Fig. 2 einen Querschnitt durch ein Pfostenprofil für einen Mittelpfosten einer Front mit Verkleidungsteil und Pfostenhalter,
Fig. 3 einen Querschnitt durch ein Pfostenprofil für einen hinteren Randpfosten mit Verkleidungsteilen, seitlicher und rückwärtiger Trennwand und Querstegen,
Fig. 4 einen Querschnitt durch ein Pfostenprofil für einen hinteren Mittelpfosten,
Fig. 5 einen Querschnitt durch eine Variante des Pfostenprofils gemäss Figur 3,
Fig. 6 einen Querschnitt durch eine Variante des Pfostenprofils gemäss Figur 4,
Fig. 7 einen Querschnitt durch eine Variante des Pfostenprofils gemäss Figur 1,
Fig. 8 einen Querschnitt durch eine Variante des Pfostenprofils gemäss Figur 2,
Fig. 9 einen Quersteg,
Fig. 10 einen Breitensteg für Sockel und Sturz in einer Front,
Fig. 11 eine Skizze eines mehrgeschossigen Installationsschachtes,
Fig. 12 eine perspektivische Skizze eines in einer Wandnische angeordneten Installationsgerüsts,
Fig. 13 einen Querschnitt durch ein Installationsgerüst gemäss Figur 12,
Fig. 14 einen Querschnitt durch einen Installationsschacht in einer Wandecke,
Fig. 15 einen Querschnitt durch einen freistehenden Installationsschrank mit zwei Türe auf einer Seite,
Fig. 16 einen Querschnitt durch einen freistehenden Installantionsschrank mit zwei Abteilen und auf zwei gegenüberliegenden Seiten je zwei Türen,
Fig. 17 einen Querschnitt durch einen freistehenden Installationsschrank mit vier Abteilen und auf zwei gegenüberliegenden Seiten je zwei Türen.

### Beschreibung der Ausführungsbeispiele

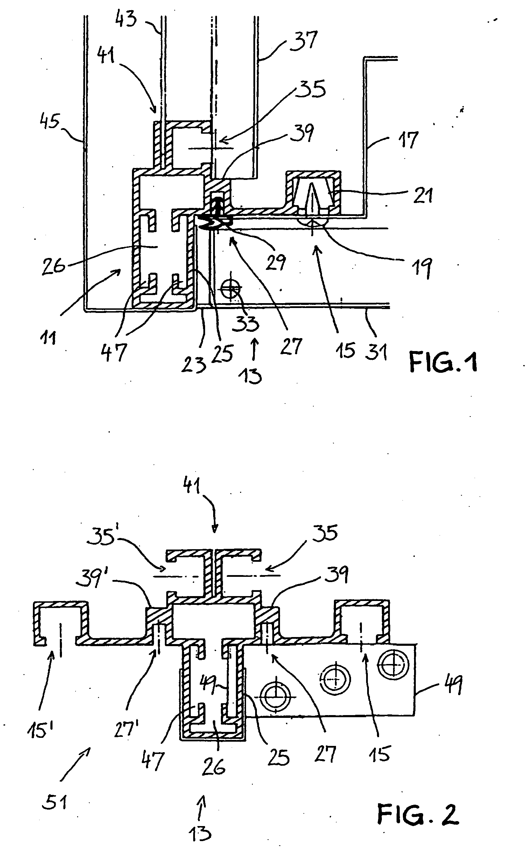

**Figur 1** zeigt einen Querschnitt durch eine Ecke eines Schrankes mit einem Eckpfosten aus einem erfindungsgemässen Front-Eckpfosten-Profil 11. Das Front-Eckpfosten-Profil 11 weist eine zur Frontseite 13 des Schrankes gerichtete Einsatz-Befestigungsleiste 15 auf. An dieser Einsatz-Befestigungsleiste 15 können unterschiedlichste Einsätze 17 befestigt werden. Dargestellt ist ein Einsatzblech 17 zur Aufnahme einer Heizungsverteilung. Solche Einsätze können mit Schrauben 19 und Klemmstücken 21 in der C-Nut-förmigen Einsatz-Befestigungsleiste 15 in jeglicher Position festgemacht werden. An der Einsatz-Befestigungsleiste 15 ist auch ein Sockelelement 23 und ein nicht dargestelltes Sturzelement befestigt.

In der Einsatz-Befestigungsleiste 15 ist ein handelsübliches Klemmstück 21 dargestellt.

Die Befestigungsleiste kann aber auch eine andere Form aufweisen und die Befestigung daran entsprechend angepasst erfolgen. Wesentlich ist, dass die Befestigungsleiste eine durchgehende stufenlose Verschiebung von mit ihr kompatiblen Befestigungselementen erlaubt.

Die Einsatz-Befestigungsleiste 15 ist in einem Abstand zu einem zur Frontseite 13 vorspringenden Sockelanschlag 25 angeordnet. Der Sockelanschlag 25 ist durch die Aussenwand eines Hohlprofilteils 26 des Front-Eckpfosten-Profils 11 gebildet. An diesen Sockelanschlag 25 schlägt ein Sockel 23 an. Zwischen diesem Sockelanschlag 25 und der Einsatz-Befestigungsleiste 15 ist eine zur Frontseite 13 hin offene Dichtungsnut 27 ausgebildet. Darin steckt eine Gummiprofildichtung 29. Eine die Öffnung zwischen dem gezeigten und einem benachbarten Pfosten verschliessende Türe 31 ist im Sockelelement 23 um den Punkt 33 drehbar angelenkt (und analog auch im Sturzelement). Die Einsatz-Befestigungsleiste 15 ist öffnungsseitig des Sockelanschlags 25 angeordnet. Der Abstand der Einsatz-Befestigungsleiste 15 vom Sockelanschlag 25 ist derart bemessen, dass die in der Einsatz-Befestigungsleiste 15 befestigten Schrauben 19 auch bei geöffneter Türe 31 zugänglich sind.

Auf der von der Frontseite 13 abgewandten Seite des Front-Eckposten-Profils 11 ist eine Tiefensteg-Befestigungsleiste 35 ausgebildet. Die Tiefensteg-Befestigungsleiste 35 ist genau gleich ausgebildet wie die Einsatz-Befestigungsleiste 15. Sie ist jedoch im Vergleich mit der Einsatz-Befestigungsleiste 15 um 90° gedreht und direkt am Hohlprofilteil 26 angeordnet. Ihre Befestigungsseite ist zur Einsatz-Befestigungsleiste 15 hin gerichtet. Daher ist ein Quersteg 37, der die Tiefe des Schrankes bestimmt, von der Öffnung in der Schrankfront her hinter der Einsatz-Befestigungsleiste 15 an der Tiefensteg-Befestigungsleiste 35 befestigbar. Angrenzend an die Tiefensteg-Befestigungsleiste 35 ist ein Stirnanschlag 39 für die Stirnseite des daran befestigten Querstegs 37 ausgebildet. Der Stirnanschlag 39 ist auf der Rückseite des die Dichtungsnut 27 bildenden Profilteils ausgebildet.

Der Abstand des Stirnanschlags 39 von der Achse der Tiefensteg-Befestigungsleiste 35 ist auf ein Rastermass einer im Quersteg 37 vorhandenen Lochung ausgerichtet, wobei der Schnittverlust beim Ablängen der Querstege 37 von einem Endlosprofil berücksichtigt ist.

Dies gilt allgemein für die Beziehung zwischen Befestigungsleiste und Stirnanschlag, mit Ausnahme der Einsatz-Befestigungsleiste 15.

Der Rücken der Tiefensteg-Befestigungsleiste bildet zusammen mit einer dazu parallelen Profilrippe eine Einstecknut 41 zum Einstecken einer Seiten-Trennwand 43. Eine äussere Seitenwand 45 ist gebildet durch ein das Hohlprofil umgreifendes Blechteil. Sie ist mit dem Pfostenprofil 11 verschraubt. Im Innern des Hohlprofils sind zwei Öffnungen 47 ausgebildet, in welche jeweils von der Stirnseite des Pfostens her ein Pfostenhalter aus einem Flacheisen eingesteckt werden kann. Ein solches Pfostenhalter 49 ist in **Figur 2** dargestellt. Es besteht z.B. aus einem rechtwinklig abgebogenen Flacheisen mit drei Schraubenlöchern zur Befestigung am Boden bzw. an der Decke eines Bauwerks.

**Figur 2** zeigt einen dem Front-Eckpfosten 11 entsprechenden Front-Mittelpfosten 51. Das Profil dieses Front-Mittelpfostens ist spiegelsymmetrisch ausgebildet zu einer Ebene durch die Einstecknut 41, bzw. zur Mittelebene des Hohlprofils. Entsprechend sind beidseitig des den Sockelanschlag 25 bildenden Profilteils, hier der Hohlprofilteil 26 des Pfostenprofils, jeweils eine Einsatz-Befestigungsleiste 15,15' und eine Dichtungsnut 27,27' ausgebildet. Die Einstecknut 41 ist durch die beiden Rücken der zwei symmetrisch angeordneten Tiefensteg-Befestigungsleisten 35 und 35' gebildet.

Das Front-Mittelpfosten-Profil 51 ist im Querschnitt entsprechend kreuzförmig ausgelegt. In einer Achse parallel zur Frontseite sind von links nach rechts eine Einsatz-Befestigungsleiste 15', ein Abstandstück des Profils, eine Dichtungsnut 27' und der auf der Symmetrieebene angeordnete Hohlprofilteil 26, welcher die Ebene gebildet durch die Befestigungsseiten der Einsatz-Befestigungsleisten 15 und 15' und die Abstandstücke auf die Frontseite 13 hin überragt und beidseitig einen Sockelanschlag 25,25' bildet. Die Tiefe des Sockelanschlags ist auf die Tiefe des Breitenstegs 91, der an die Einsatz-Befestigungsleiste 15 geschraubt wird, und auf die Tiefe der Türe 31 abgestimmt. Weiter nach rechts folgen symmetrisch dazu die Dichtungsnut 27, ein Abstandstück und die Einsatz-Befestigungsleiste 15. Auf einer zu dieser Achse senkrechten Achse sind von der Frontseite her kommend der Hohlprofilteil 26 mit den Öffnungen 47 für ein Pfostenhalter 49 darin und hinter der Ebene der Einsatz-Befestigungsleisten 15,15' zwei Tiefensteg-Befestigungsleisten 35,35', welche mit Ihren Rücken gegeneinander gerichtet zwischen sich eine auf der Symmetrieebene liegende Einstecknut 41 definieren.

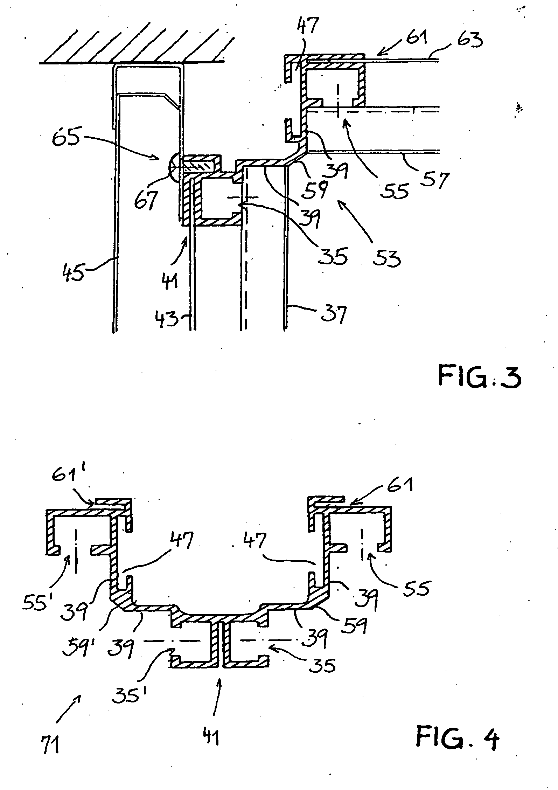

**Figur 3** zeigt den hinteren Eckpfosten 53. In einem Schrank ist er auf den Front-Eckpfosten 11 orthogonal ausgerichtet und durch den die Schranktiefe bestimmenden Quersteg 37 mit diesem verbunden. Das Profil des hinteren Eckpfostens 53 besitzt zwei in rechtem Winkel zueinander stehende Befestigungsleisten 35,55 für den die Tiefe bestimmenden Quersteg 37 (Tiefensteg) und einen die Schrankbreite oder Kanalbreite bestimmenden Quersteg 57 (Breitensteg). Zwischen der Breitensteg-Befestigungsleiste 55 und der Tiefensteg-Befestigungsleiste 35 ist am Profil eine Winkelwand 59 ausgebildet. Mit den Schenkeln der Winkelwand 59 bildet diese auf ihrer konvexen Seite die Stirnanschläge 39 für die Querstege 37 und 57, welche senkrecht zu den Befestigungsseiten der angrenzenden Befestigungsleisten 35,55 stehen. Die Stirnseiten 87 der Querstege 37, 57 liegen vollflächig an den Stirnanschlägen 39 an. Auf der konkaven Seite ist an der Winkelwand 59 eine Öffnung 47 für ein Pfostenhalter 49 ausgebildet.

Jeweils an die Rücken der Befestigungsleisten 35 und 55 anschliessend sind zwei Einstecknuten 41 bzw. 61 für eine Seiten-Trennwand 43 bzw. eine Rücken-Trennwand 63 ausgebildet. Der Rücken der Befestigungsnut 35,55 bildet zusammen mit einer dazu parallelen Rippe am Pfostenprofil 53 die Einstecknut 41,61. Angrenzend an die Tiefensteg-Befestigungsleiste 35 ist eine Schraubennut 65 ausgebildet. In diese Schraubennut 65 sind passende gewindeschneidende Schrauben einschraubbar. Mit einer solchen Schraube 67 ist in Fig. 3 ein Halteblech 69 am Pfostenprofil 53 befestigt, in welches Halteblech 69 die den Schrank verkleidende Seitenwand 45 eingeschoben ist.

Das Pfostenprofil 53 ist nicht symmetrisch. Es ist dennoch sowohl für linke als auch für rechte hintere Eckpfosten verwendbar, da durch auf den Kopf Stellen eines Pfostens zwei Pfosten symmetrisch zueinander angeordnet werden können. Das Profil könnte jedoch symmetrisch ausgelegt werden, indem zwei Öffnungen 47 und zwei Schraubennuten vorgesehen würden.

In **Figur 4** ist ein Pfostenprofil 71 für einen hinteren Mittelpfosten dargestellt. Dieses ist spiegelsymmetrisch ausgelegt und weist vier Befestigungsleisten auf. Es ist im Wesentlichen eine symmetrische Verdoppelung des hinteren Eckpfosten-Profils 53, wobei die Tiefensteg-Befestigungsleisten 35, 35' Rücken gegen Rücken angeordnet sind und zwischen sich die Einstecknut 41 für die Seiten-Trennwand 43 definieren. Lediglich die Schraubennut 65 ist weggelassen worden.

Im Pfostenprofil 71 ist jedoch eine gegenüber der Anordnung im Pfostenprofil 53 für den hinteren Eckpfosten unterschiedliche Variante der Anordnung von Öffnung 47 und

Einstecknut 61 für die Rücken-Trennwand 63 gezeigt. Beim Eckprofil 53 reicht die Einstecknut 61 über die gesamte Breite der Breitensteg-Befestigungsleiste 55 und die die Einstecknut 61 definierende Rippe verläuft ebenfalls über diese gleiche Breite. Hingegen ist die Rippe und entsprechend die Einstecknut 61 beim Mittelpfostenprofil 71 kürzer als die durch den Rücken der Befestigungsleiste 55 gebildete Wandung, so dass eine Rücken-Trennwand auf den Rücken der Befestigungsleiste 55 aufgelegt und danach darauf liegend in die Einstecknut 61 eingeschoben werden kann.

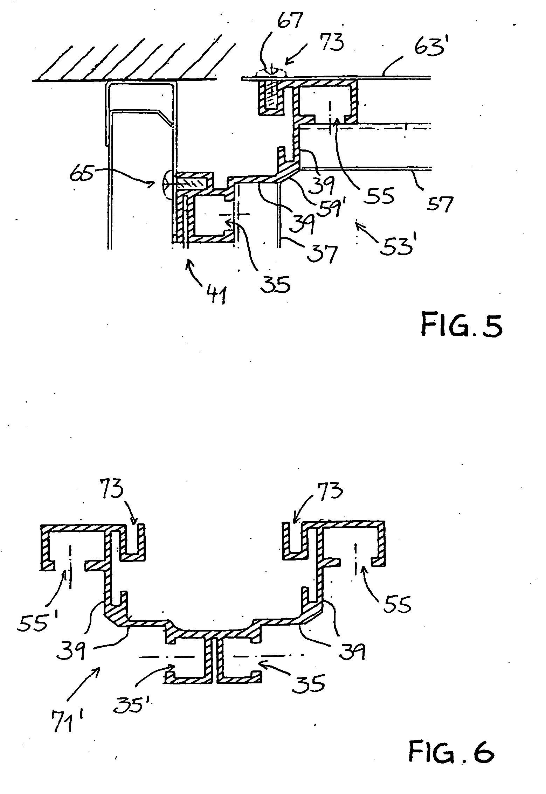

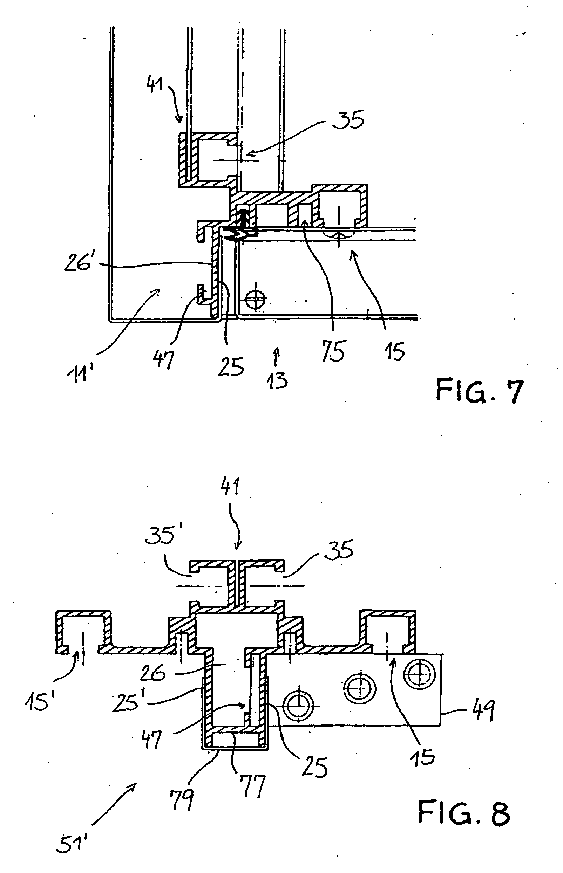

In **Figur 5 und 6** sind Varianten 53',71' zu den hinteren Pfostenprofilen 53,71 dargestellt. Bei diesen Profilen ist auf eine Einstecknut 61 für die Rücken-Trennwand 63 verzichtet worden. Es ist dafür eine Schraubennut 73, bzw. 73' vorgesehen, in welcher die Rücken-Trennwand 63' mit einer Schraube 67 festgeschraubt ist. Die Profile können in diesem Sinne auch weiter variiert werden. So ist in **Figur 7** ein Front-Eckprofil 11' dargestellt, welches in Abwandlung des Profils 11 keinen Hohlprofilteil 26 aufweist. Daran ist zudem neben der Einsatz-Befestigungsleiste 15 eine Schraubennut ausgebildet. Einsätze können daher alternativ in der Einsatz-Befestigungsleiste 15 oder der Schraubennut 75 festgemacht werden. Die Schraubennut 75 kann auch z.B. zur Befestigung von Beschriftungstafeln dienen.

In **Figur 8** ist ein Front-Mittelpfosten 13' dargestellt, dessen Profil lediglich eine Öffnung 47 für ein Pfostenhalter 49 aufweist und daher nicht vollkommen symmetrisch ist. Bei diesem Front-Mittelpfosten-Profil 13' ist auch die frontseitige Wandung 77 des Hohlprofilteils 26 gegenüber den die Sockelanschläge 25,25' bildenden Wandungen zurückversetzt. Im Übrigen ist das Profil 13' dem Profil 13 gleich. Zur Abdeckung des Hohlprofilteils 26 ist ein darauf klemmendes U-Profil 79 vorgesehen. Dieses wird zusammen mit den Türen 31 und anderen Verkleidungselementen 45 zu einem relativ späten Zeitpunkt mit einer wählbaren Oberfläche geliefert. ,

Durch die Anordnung eines Stirnanschlags 25,25',39 für die Stirnseite eines Querstegs 37, 57 im Abstand zur Achse einer C-Nut 15,35,55 an einem Pfostenprofil 11,51,53,71 ist eine winkelsteife Befestigung eines winklig abgelängten Querstegs 37,57 an der C-Nut mit nur einer einzigen Schraube 19 möglich. Dank der Anordnung von zwei in einem rechten Winkel zueinander stehende C-Nuten 15,35,55 mit solchen Stirnanschlägen 25,39 an einem Profil lassen sich mit diesem Profil als Pfosten Medienkanäle auf einfachste Art erstellen. Dazu werden Pfosten aus einem solchen Profil 11,51,53,71 mittels Querstegen 37,57, vorzugsweise aus Befestigungsschienen zur Befestigung von Kabeln, Leitungen und Röhren, miteinander verbunden.

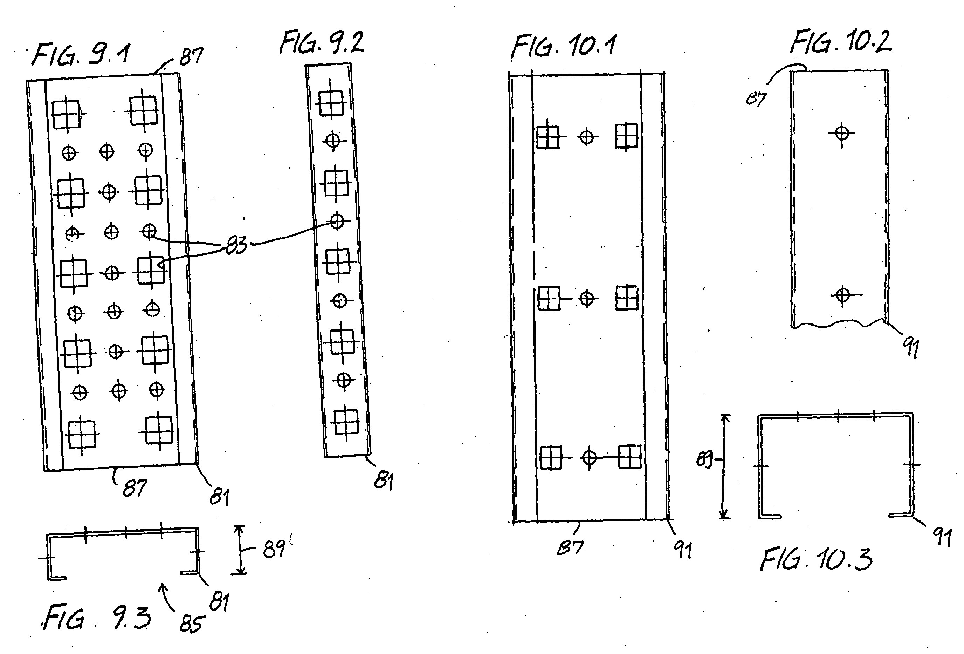

In **Figur 9** ist ein Quersteg 81 dargestellt, wie es in der Regel zum Aufbauen des Installationsgerüsts an den Enden der erfindungsgemässen Pfosten angeordnet wird. In Figur 9.1 ist eine Ansicht, in Figur 9.2 eine Aufsicht und in Figur 9.3 ein Querschnitt durch das Profil des Querstegs dargestellt. Das Profil des Querstegs 81 ist C-förmig aus einem Blech geformt, rechtwinklig abgelängt und weist an den drei geschlossenen Seiten des C Lochungen 83 auf, in denen Installationen befestigt werden können. Beim Zusammenstellen eines Installationsgerüsts wird der Quersteg 81 mit der offen Seite 85 gegen die Befestigungsleiste 35,35',55,55' eines Pfostens 11,51,53,71 gelegt, die Stirnseite 87 gegen den Anschlag 39 gestossen und mit zwei Schrauben an der Befestigungsleiste 35, 35',55,55' befestigt. Die Tiefe 89 des Querstegs ist auf die Tiefe der Anschläge 39 an den Pfosten abgestimmt.

In **Figur 10** ist ein Breitensteg 91 für den Sockel oder Stirnbereich der Frontseite dargestellt. In Figur 10.1 ist eine Ansicht, in Figur 10.2 eine Aufsicht und in Figur 10.3 ein Querschnitt durch das Profil des Breitenstegs 91 dargestellt. Der dargestellte Breitensteg 91 für die Frontseite ist weitgehend wie die andern Querstege 81 ausgebildet, weist aber entsprechend der grösseren Tiefe des Anschlags 25 an den Pfosten 51 eine grössere Tiefe 89 als der Quersteg 81 für die Tiefenstege und die Breitenstege für hinten am Installationsgerüst auf (Vergleiche Figur 9). Diese grössere Tiefe ist nicht unbedingt erforderlich. Als Breitensteg kann auch ein Profil gemäss Figur 9 Verwendung finden. Das tiefere Breitenstegprofil ist ebenfalls C-förmig aus einem Blech geformt und weist in den geschlossenen Seiten des C jeweils Lochungen für die Befestigung am Pfosten und mittig eine Lochung für die Befestigung einer Abdeckung auf.

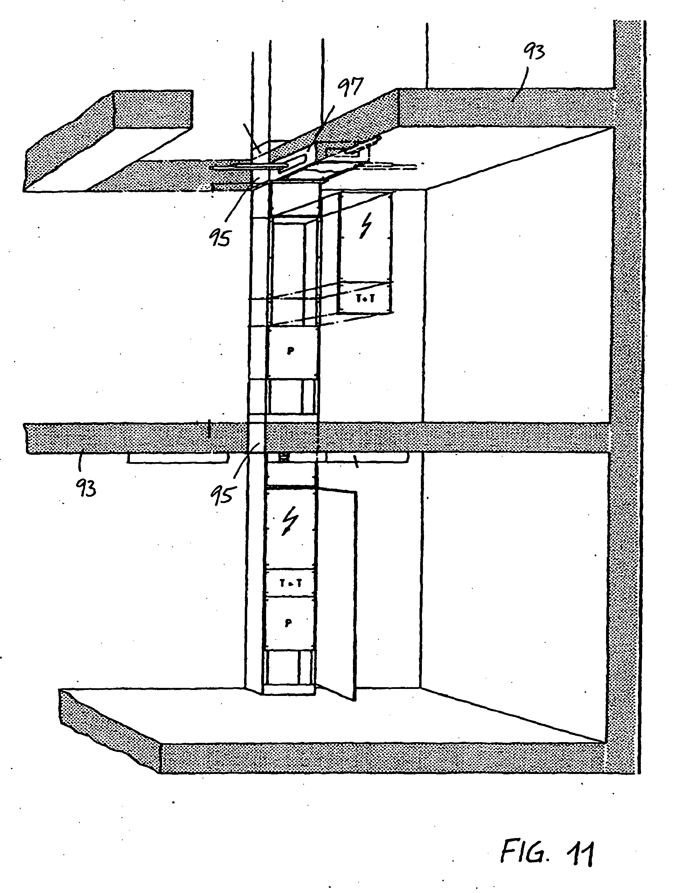

Aus den Pfosten und Querstegen lassen sich Installationsgerüste für über mehrere Stockwerke eines Gebäudes hinwegreichende Installationsschächte erstellen. In **Figur 11** ist ein solcher Schacht über drei Geschosse dargestellt. In den Geschossdecken 93 sind Aussparungen 95 vorgesehen, durch die die Installationsleitungen von einem Geschoss ins andere reichen. Anschliessend an die Aussparungen 95 können Verteiler 97 angeordnet sein. In den Installationsschächten können verschiedene Installationen nebeneinander installiert sein, z.B. Telefon, EDV und Starkstrom. Aber auch Sanitärleitungen, Heizleitungen, Lüftungsrohre etc. können in solchen Installationsschächten untergebracht werden. Der dargestellte Schacht ist vor einer Gebäudewand als Aufputzschacht aus einem Installationsgerüst mit erfindungsgemässen Pfosten dargestellt. Mit Vorteil werden die unterschiedlichen Medien in verschiedenen Bereichen im Schacht geführt, z.B. an der linken Seitenwand EDV, hinten Starkstrom, und rechts Telefon.

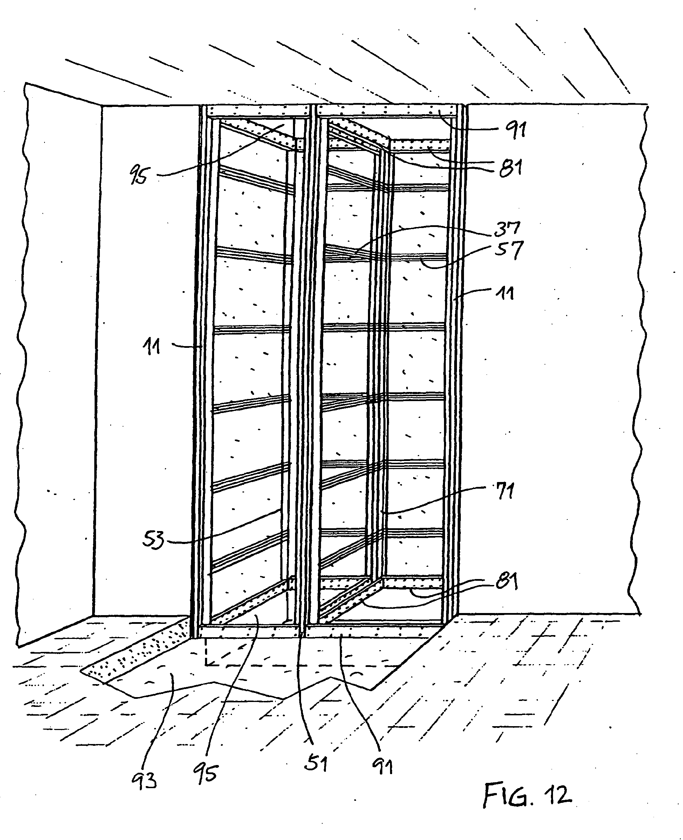

Das Installationsgerüst kann auch in einem dreiseitig gemauerten Schacht angebracht werden, was eine Unterputzinstallation gemäss **Figur 12** ergibt. In Figur 12 ist ein zweifeldriger Unterputz-Installationsschrank dargestellt. Aus zwei Pfosten mit dem Profil 11 und einem Pfosten mit dem Profil 51 und vier Breitenstegen 91 ist eine Front gebildet. Die übrigen Teile des Installationsgerüsts dienen der Installation und können z.B. bei einem einfachen Wandschrank weggelassen werden.

In Figur 12 ist ein über mehrere Stockwerke durchgehender Installationsschacht dargestellt. Entsprechend sind Aussparungen 95 in Boden und Decke 93 vorgesehen. Im Schacht ist ein zwischen Boden und Decke befestigtes Installationsgerüst mit zwei Feldern angebracht. Dieses Installationsgerüst setzt sich zusammen aus drei vorgefertigten Elementen; Einer an der linken Seite anzuordnenden Installationsleiter aus einem vorderen Eckpfosten 11 und einem hinteren Eckpfosten 53, je einer unteren und einer oberen Tiefensteg 81 und einer Anzahl von Querstegen 37 aus einem Kombischienenprofil zur Befestigung sowohl von Rohrschellen als auch von Kabelbindern; einer mittleren Installationsleiter aus einem vorderen 51 einem hinteren Mittelpfosten 71, verbunden mit zwei oberen und zwei unteren Tiefenstegen 81, und einer Anzahl von Querstegen 37 aus einer Kombischiene, je nach Bedarf lediglich auf einer Seite oder auf beiden Seiten der Installationsleiter; und einer dritten Installationsleiter, welche der ersten entspricht und rechts anzuordnen ist. Diese Installationsleitern sind mit vorderen und hinteren Breitenstegen 81 unten und oben und mit einer Anzahl von Kombischienen 57 an der hinteren Wand des Schachtes verbunden.

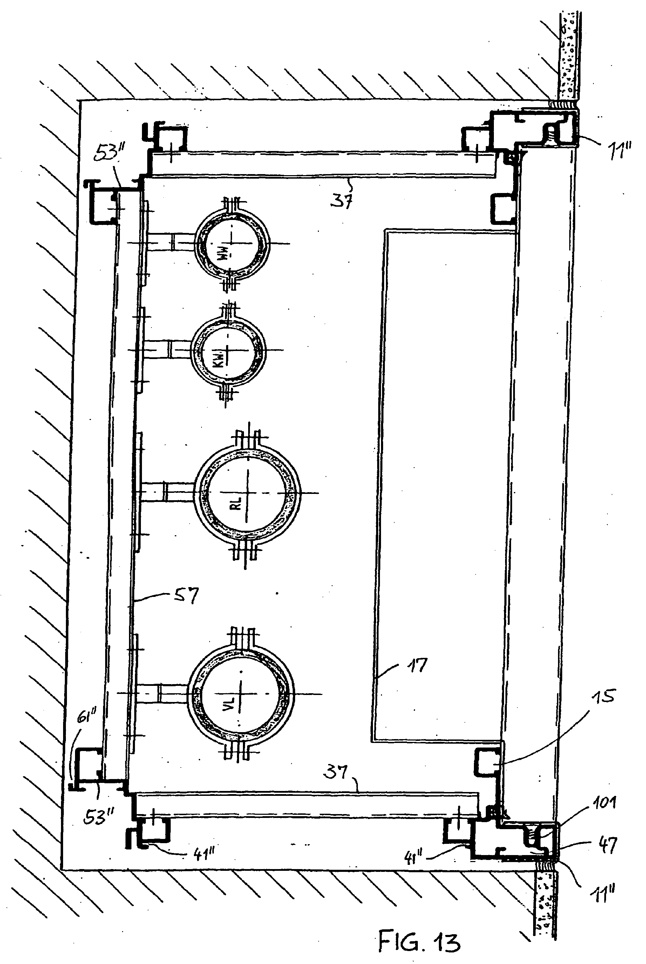

Die Montage des Installationsgerüstes erfolgt vor dem Einbringen des Unterlagsbodens 99. Die unteren Breitenstege 91 werden daher vom Unterlagsboden 99 abgedeckt. An den Eckpfosten wird der Verputz an den Wänden abgezogen (siehe auch Figur 13). Dadurch ist eine Übereinstimmung zwischen Wandflucht und Schrankfront gewährleistet. Nach der Installation der Leitungen am Installationsgerüst und der Fertigstellung von Unterlagsboden und Wandverputz wird die Schrankfront auf das Installationsgerüst gesetzt. Die Pfosten werden verkleidet mit Verkleidungsblechen in einer gewünschten Farbe. Eine Sockelblende und eine Sturzblende werden eingesetzt und in jedem Feld wird eine Türe eingehängt

In **Figur 13** ist ein Querschnitt durch einen solchen Schacht dargestellt. Die verwendeten Profile sind leicht abgeändert gegenüber den Profilen in Figuren 1 bis 4. So sind die Einstecknuten 41" und 61" minimiert, ist an den vorderen Profilen 11" eine Einschraubnut 101 ausgebildet und ist jeweils lediglich eine Öffnung 47 zum Einstecken eines Flacheisenwinkels vorgesehen. In dieser Öffnung 47 sind Rippen ausgebildet, welche in die Öffnungsweite hineinstehen. Diese Rippen werden beim Einstecken des Flacheisens teilweise abgetragen. So wird selbst bei leichten Dickenschwankungen bei den verwendeten Flacheisen ein Passsitz erreicht.

Der in Figur 13 dargestellte Installationsschacht ist sowohl seitlich wie an der Rückwand mit Querstegen 37, 57 versehen. An den rückwärtigen Querstegen sind Vorlauf (VL) und

Rücklauf (RL) einer Heizungsinstallation wie auch Warmwasser (WW) und Kaltwasser (KW) der Wasserversorgung angeordnet. Die Rohre sind mit Rohrschellen befestigt. Vor diesen Rohren ist eine Einbaukonsole 17 an die frontseitig zugänglichen Befestigungsleisten 15 angeschraubt. In der Einbaukonsole 17 kann eine Heizungsverteilung oder eine Wasserverteilung angebracht sein.

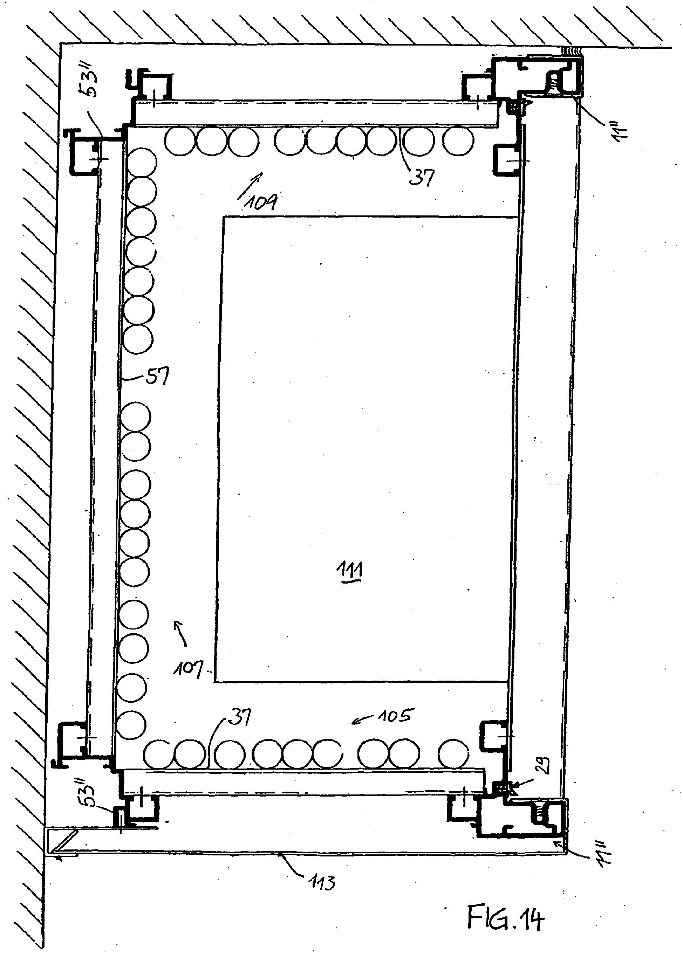

In **Figur 14** ist eine Elektrosteigzone dargestellt. Im Installationsgerüst mit den vier Pfosten wie im Beispiel gemäss Figur 13 und den gleichen Querstegen 81 ist auf der linken Seite die Schwachstrominstallation 105 angeordnet, hinten die Starkstrominstallation 107 und rechts die Telefoninstallation 109. Im Raum davor ist ein Verteilerschrank 111 von vorne in das Installationsgerüst gehängt. Auf der linken Seite, an der das Installationsgerüst nicht von einer Mauer umwandet ist, ist eine

Blechverkleidung 113 an der Pfosten 11" und 53" befestigt.

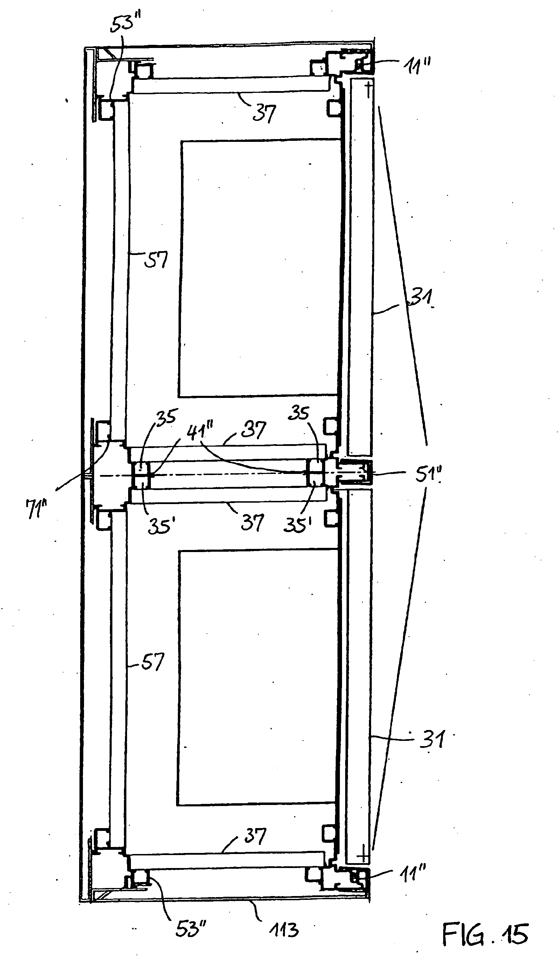

In **Figur 15** ist ein freistehender, zweifeldriger Installationsschrank mit zwei Türen 115 dargestellt. Bei diesem ist nicht nur seitlich eine Blechverkleidung angebracht, sondern auch hinten auf die hinteren Pfosten 53" und 71". Die Einstecknuten 41" für Trennwände 43 an den mittleren Pfosten 51" und 71" sind im Unterschied zu den in Figuren 2 und 4 gezeigten Beispielen aussen auf die Befestigungsleisten 35,35' aufgesetzt und nicht zwischen deren Rückwänden ausgebildet.

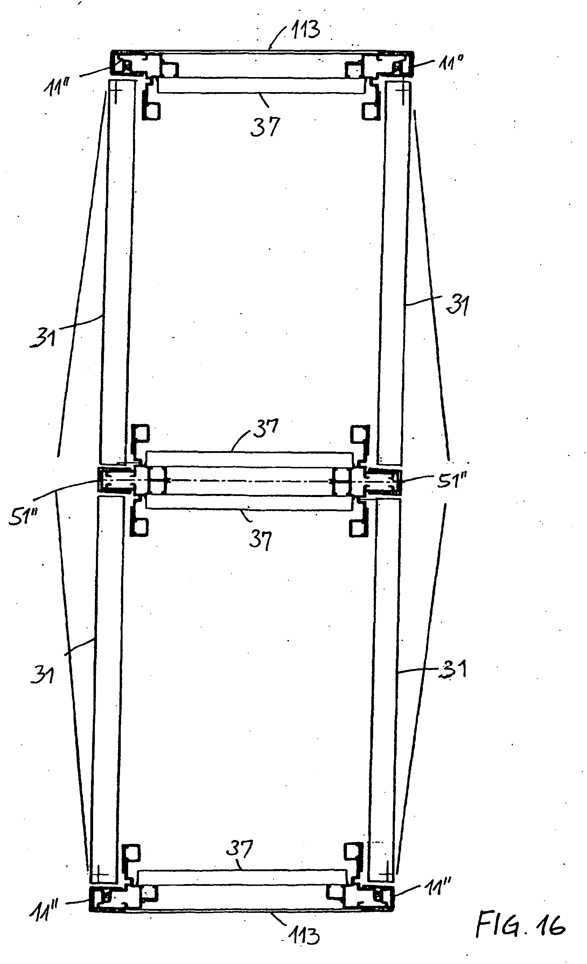

Werden anstelle der Pfosten 53" und 71" ebenfalls Pfosten 11" und 51" vorgesehen, ergibt das einen Schrank, wie der in **Figur 16** abgebildet ist. Bei diesem können vorne und hinten Türe 115 angebracht werden. Die Installationen sind hingegen lediglich an den seitlichen Installationsleitern anzubringen. Es können aber einseitig oder beidseitig Verteilkästen oder Sicherungstableaus etc. angebracht werden.

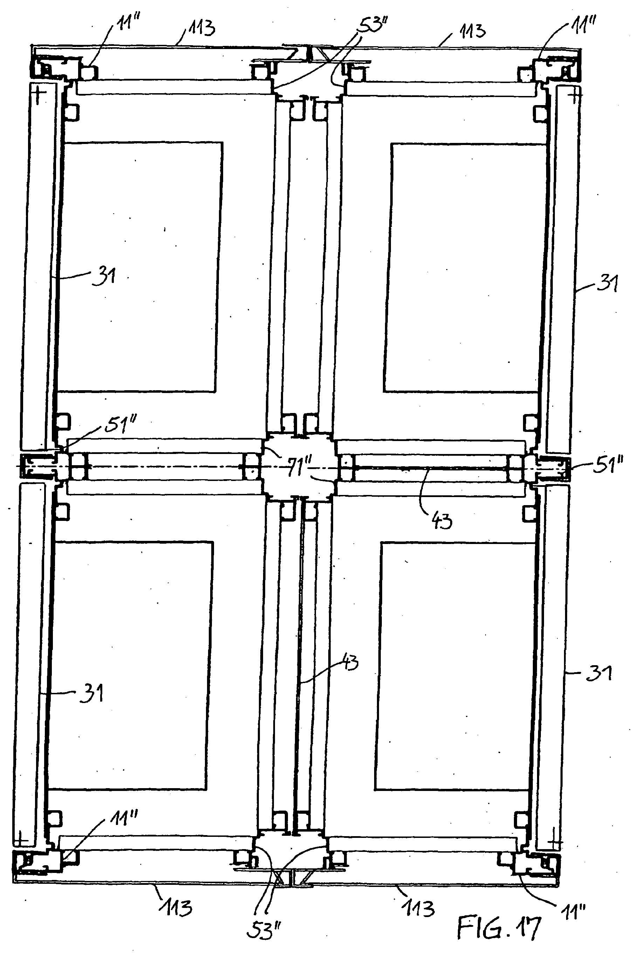

In **Figur 17** ist schliesslich ein zweiseitiger und auf jeder Seite zweifeldriger, freistehender Installationsschrank dargestellt. Er ist im Wesentlichen aus zwei Installationsgerüsten, wie eines in Figur 15 dargestellt ist, zusammengesetzt. Die beiden Installationsgerüste sind Rücken gegen Rücken aneinandergefügt. Ein Feld oder Abteil des Schrankes ist mit Trennwänden 43 gegenüber den anderen Abteilen abgeschirmt. Dies erlaubt die Abschirmung von EDV-Anlagen z.B. gegenüber den Einflüssen von benachbarten Starkstromleitungen etc.

## Patentansprüche

1. Pfostenprofil (11,51,53,71) für mit Querstegen (37,57,81,91) zu verbindende Pfosten, mit darin ausgebildet wenigstens einer ersten (z.B. 15,55) und einer zweiten (z.B.35) Befestigungsleiste parallel zur Profillängsachse, welche Befestigungsleisten (15,35,55) in einem 360° ganzzahlig teilenden Winkel, insbesondere 90 Grad, zueinander stehen und eine parallel zur Profillängsachse verstellbare Befestigung eines Querstegs (37,57, 81,91) an einer Befestigungsseite der Befestigungsleiste erlauben, wobei eine Senkrechte zur Befestigungsseite jeweils quer zur Längsrichtung eines daran zu befestigenden Querstegs (37,57, 81,91) gerichtet ist, **dadurch gekennzeichnet, dass** die Befestigungsleisten (15,35,55) eine parallel zur Profillängsachse stufenlos verstellbare Befestigung erlauben und am Pfostenprofil parallel zu den Befestigungsleisten (15,35,55) je ein Stirnanschlag (25,39) zum Anschlagen einer Stirnseite (87) eines Querstegs (37,57,81,91) derart ausgebildet ist, dass an jeder der beiden Befestigungsleisten (15,35,55) auf gleicher Höhe je ein Quersteg (37,57, 81,91) befestigt und mit seiner Stirnseite (87) an den jeweiligen Stirnanschlag (25,39) angeschlagen werden kann.

2. Pfostenprofil nach Anspruch 1, **gekennzeichnet durch** wenigstens eine Einstecknut (41,61) zum Einstecken einer Trennwand (43,63) in das Pfostenprofil, welche Einstecknut (41,61) derart ausgerichtet ist, dass eine darin eingesteckte Trennwand (43,63) parallel zu einem an einer Befestigungsleiste (35,55) befestigten Quersteg (37,57,81,91) verläuft.

3. Pfostenprofil nach Anspruch 2, **dadurch gekennzeichnet, dass** die Einstecknut (41;61) auf der der Befestigungsseite gegenüberliegenden Seite der Befestigungsleiste (35,55) in direkter Nachbarschaft zu dieser angeordnet ist.

4. Pfostenprofil nach einem der Ansprüche 1 bis 3, **gekennzeichnet durch** einen Profilquerschnitt mit wenigstens einer zum Einstecken eines Flacheisens (49) in Profillängsrichtung in ein Profilende dimensionierten Öffnung (47).

5. Pfostenprofil nach Anspruch 4, **dadurch gekennzeichnet, dass** in dieser Öffnung wenigstens eine Rippe ausgebildet ist, welche durch das Einstecken des Flacheisens verformbar ist.

6. Pfostenprofil nach einem der Ansprüche 1 bis 5 **dadurch gekennzeichnet, dass** die Befestigungsleiste (15,35,55) durch eine C-förmige Nut gebildet ist.

7. Pfostenprofil nach einem der Ansprüche 1 bis 6, **dadurch gekennzeichnet, dass** zwischen zwei Befestigungsleisten (35,55) eine Winkelwand (49) ausgebildet ist, welche mit ihrer konvexen Seite Stirnanschläge (39) für an diesen Befestigungsleisten (35,55) befestigte Querstege (37,57,81,91) bildet.

8. Pfostenprofil nach einem der Ansprüche 1 bis 6, **dadurch gekennzeichnet, dass** ein frontseitig über eine Befestigungsseite einer frontseitigen Befestigungsleiste (15) vorstehender Profilteil (26) den Stirnanschlag (25) für einen an dieser frontseitigen Befestigungsleiste (15) befestigten Quersteg bildet, insbesondere für ein Sockel-(23) und ein Sturzelement, und dass der andere Stirnanschlag (39) auf der der Befestigungsseite gegenüberliegenden Seite dieser frontseitigen Befestigungsleiste (15) am Pfostenprofil (11,51) ausgebildet ist.

9. Pfostenprofil nach Anspruch 8, **dadurch gekennzeichnet, dass** zwischen der frontseitigen Befestigungsleiste (15) und dem durch den frontseitige Profilteil (26) gebildeten Stirnanschlag (25) eine Nut (27) für ein Dichtungsprofil ausgebildet ist.

10. Pfostenprofil nach einem der Ansprüche 1 bis 9 in Verbindung mit Anspruch 2, **dadurch gekennzeichnet, dass** wenigstens eine Einstecknut (41,61) für eine Trennwand peripher am Profil (11,53,71) derart ausgebildet ist, dass eine darin eingesteckte ebene Trennwand parallel zur Richtung eines am Profil befestigten Querstegs gerichtet ist.

11. Pfostenprofil nach einem der Ansprüche 1 bis 10 in Verbindung mit Anspruch 2, **dadurch gekennzeichnet, dass** das Profil (51,51',71,71') im Wesentlichen spiegelsymmetrisch ausgebildet ist und eine Einstecknut auf der Symmetrieebene ausgebildet ist.

12. Pfostenprofil-Satz mit wenigsten zwei unterschiedlichen Profilen (11,51), mit darin ausgebildet wenigstens einer ersten (z.B. 15,55) und einer zweiten (z.B.35) Befestigungsleiste parallel zur Profillängsachse, welche Befestigungsleisten (15,35,55) in einem 360° ganzzahlig teilenden Winkel, insbesondere 90 Grad, zueinander stehen und eine parallel zur Profillängsachse verstellbare Befestigung eines Querstegs (37,57, 81,91) an einer Befestigungsseite der Befestigungsleiste erlauben, wobei eine Senkrechte zur Befestigungsseite jeweils quer zur Längsrichtung eines daran zu befestigenden Querstegs (37,57, 81,91) und quer zur Profillängsachse gerichtet ist, **dadurch gekennzeichnet, dass** die Befestigungsleisten (15,35,55) eine parallel zur Profillängsachse stufenlos verstellbare Klemmbefestigung erlauben und am Pfostenprofil parallel zu den Befestigungsleisten (15,35,55) je ein Stirnanschlag (25,39) zum Anschlagen einer Stirnseite (87) eines Querstegs (37,57,81,91) derart ausgebildet ist, dass an jeder der beiden Befestigungsleisten (15,35,55) auf gleicher Höhe je ein Quersteg (37,57, 81,91) befestigt und mit seiner Stirnseite (87) an den jeweiligen Stirnanschlag (25,39) angeschlagen werden kann, wobei ein frontseitiger Profilteil (26) den Stirnanschlag (25) für einen an einer frontseitigen Befestigungsleiste (15) zu befestigenden Quersteg (91) bildet, und der andere Stirnanschlag (39) auf der der Befestigungsseite gegenüberliegenden Seite dieser frontseitigen Befestigungsleiste (15) ausgebildet ist, und dass bei einem ersten Profil (11) lediglich einseitig am den frontseitigen Stirnanschlag (25) bildenden Profilteil (26) eine Befestigungsleiste (15) ausgebildet ist und beim zweiten Profil (51) beidseitig am frontseitigen Stirnanschlag bildenden Profilteil (26) symmetrisch zwei Befestigungsleisten (15,15') ausgebildet sind.

13. Pfostenprofil-Satz nach Anspruch 12, **gekennzeichnet durch** ein drittes Pfostenprofil (53) mit zwei Befestigungsleisten (35,55), welches zwischen den zwei Befestigungsleisten (35,55) eine Winkelwand (59) aufweist, welche mit ihrer konvexen Seite Stirnanschläge (39) für an diesen Befestigungsleisten (35,55) befestigte Querstege (37,57,81,91) bildet, und ein einem im Wesentlichen spiegelsymmetrisch verdoppelten dritten Pfostenprofil (53) entsprechendes viertes Pfostenprofil (71) mit zusätzlicher dritter (35') und vierter (55') Befestigungsleiste an einer zweiten Winkelwand (59'), welche zusätzlichen Befestigungsleisten (35',55') und welche zweite Winkelwand (59') spiegelsymmetrisch zu den ersten zwei Befestigungsleisten (35,55) und der ersten Winkelwand (59) angeordnet sind.

14. Bausatz bestehend aus einem Pfostenprofil-Satz nach einem der Ansprüche 12 oder 13, Profilen zur Herstellung von Querstegen (37,57,81,91) und Befestigungsmitteln (19,21) zur Befestigung der Querstege (37,57,81,91) an den Pfostenprofilen (11,51,53,71).

15. Bausatz nach Anspruch 14, **gekennzeichnet durch** abgelängte Pfosten (11,51,53,71) und Querstege (37,57,81,91) und gegebenenfalls **durch** auf Mass zugeschnittene Trennwände (43,63) sowie wenigstens ein Verschlusselement (31) zum weitgehenden Abschliessen einer zwischen zwei Pfosten gebildeten Öffnung.

## Claims

1. A post profile (11, 51, 53, 71) for posts to be connected to transverse webs (37, 57, 81, 91), with at least a first (e.g. 15, 55) and a second (e.g. 35) fastening strip parallel to the profile longitudinal axis, which are formed therein, said fastening strips (15, 35, 55) being at an angle dividing 360° into an integer, in particular 90 degrees, to one another, and permitting a fastening of a transverse web (37, 57, 81, 91) to a fastening side of the fastening strip, said fastening being adjustable parallel to the profile longitudinal axis, wherein a perpendicular to the fastening side is directed in each case transversely to the longitudinal direction of a transverse web (37, 57, 81, 91) to be fastened thereon, **characterised in that** the fastening strips (15, 35, 55) permit an infinitely adjustable fastening parallel to the profile longitudinal axis, and in each case an end-abutment (25, 39) for the abutment of an end-side (87) of a transverse web (37, 57, 81, 91) is formed on the post profile parallel to the fastening strips (15, 35, 55), in a manner such that in each case a transverse web (37, 57, 81, 91) may be fastened on each of the two fastening strips (15, 35, 55) at the same height, and may be abutted with its end-side (87) onto the respective end-abutment (25, 39).{PRIVATE }

2. A post profile according to claim 1, **characterised by** at least one insert groove (41, 61) for inserting a separating wall (43, 63) into the post profile, said insert groove (41, 61) being aligned in a manner such that a separating wall (43, 63) inserted therein, runs parallel to a transverse web (37, 57, 81, 91) fastened on a fastening strip (35, 55).

3. A post profile according to claim 2, **characterised in that** the insert groove (41, 61) is arranged on the side of the fastening strip (35, 55) which is opposite the fastening side, in the direct neighborhood of this fastening strip.

4. A post profile according to one of the claims 1 to 3, **characterised by** a profile cross section with at least one opening (47) dimensioned for the insertion of a flat bar (49) in the profile longitudinal direction into a profile end.

5. A post profile according to claim 4, **characterised in that** at least one rib is formed in this opening, which may be deformed by the insertion of the flat bar.

6. A post profile according to one of the claims 1 to 5, **characterised in that** the fastening strip (15, 35, 55) is formed by a C-shaped groove.

7. A post profile according to one of the claims 1 to 6, **characterised in that** an angled wall (49) is formed between two fastening strips (35, 55), which with its convex side forms end-abutments (39) for transverse webs (37, 57, 81, 91) which are fastened on these fastening strips (35, 55)

8. A post profile according to one of the claims 1 to 6, **characterised in that** a profile part (26) which projects beyond a fastening side of a front-side fastening strip (15) forms the end-abutment (25) for a transverse web fastened on this front-side fastening strip (15), in particular for a base element (23) and a lintel element, and that the other end-abutment (39) is formed on the post profile (11, 51), on the side of this front-side fastening strip (15) which lies opposite the fastening side.

9. A post profile according to claim 8, **characterised in that** a groove (27) for a sealing profile is formed between the front-side fastening strip (15) and the end-abutment (25) formed by the front-side profile part (26).

10. A post profile according to one of the claims 1 to 9 in combination with claim 2, **characterised in that** at least one insert groove (41, 61) for a separating wall is formed peripherally on the profile (11, 53, 71) in a manner such that a plane separating wall inserted therein is directed parallel to the direction of a transverse web fastened on the profile.

11. A post profile according to one of the claim 1 to 10 in combination with claim 2, **characterised in that** the profile (51, 51', 71, 71') is formed in an essentially mirror-symmetrical manner, and an insertion groove is formed on the symmetry plane.

12. A post profile set with at least two different profiles (11, 51), with at least a first (e.g. 15, 55) and a second (e.g. 35) fastening strip parallel to the profile longitudinal axis, which are formed therein, said fastening strips (15, 35, 55) being at an angle dividing 360° into an integer, in particular 90 degrees, to one another, and permitting a fastening of a transverse web (37, 57, 81, 91) to a fastening side of the fastening strip, said fastening being adjustable parallel to the profile longitudinal axis, wherein a perpendicular to the fastening side is directed in each case transversely to the longitudinal direction of a transverse web (37, 57, 81, 91) to be fastened thereon and transversely to the profile longitudinal axis, **characterised in that** the fastening strips (15, 35, 55) permit an infinitely adjustable clamping fastening parallel to the profile longitudinal axis, and in each case an end-abutment (25, 39) for the abutment of an end-side (87) of a transverse web (37, 57, 81, 91) is formed on the post profile parallel to the fastening strips (15, 35, 55), in a manner such that in each case a transverse web (37, 57, 81, 91) may be fastened on each of the two fastening strips (15, 35, 55) at the same height, and may be abutted with its end-side (87) onto the respective end-abutment (25, 39), wherein a front-side profile part (26) forms the end-abutment (25) for a transverse web (91) to be fastened on a front-side fastening strip (15), and the other end-abutment (39) is formed on the side of this front-side fastening strip (15), which lies opposite the fastening side, and that with a first profile (11), a fastening strip (15) is only formed on one side on the profile part (26) forming the front-side end-abutment (25), and with the second profile (51), two fastening strips (15, 15') are formed symmetrically on both sides on the profile part (26) forming the front-side end-abutment.

13. A post profile set according to claim 12, **characterised by** a third post profile (53) with two fastening strips (35, 55), which comprises an angled wall (59) between the two fastening strops (35, 55), said angled wall with its convex side forming end-abutments (39) for transverse webs (37, 57, 81, 91) fastened on these fastening strips (35, 55), and a fourth post profile (71) corresponding to a third post profile doubled in an essentially mirror-symmetrical manner, said fourth post profile having an additional third (35') and fourth (55') fastening strip on a second angled wall (59'), said additional fastening strips (35', 55') and said second angled wall (59') being arranged mirror-symmetrically to the first two fastening strips (35, 55) and the first angled wall (59).

14. A kit consisting of a post profile set according to one of the claims 12 or 13, profiles for manufacturing transverse webs (37, 57, 81, 91), and fastening means (19, 21) for fastening the transverse webs (37, 57, 81, 91) on the post profiles (11, 51, 53, 71)

15. A kit according to claim 14, **characterised by** cut-to-length posts (11, 51, 53, 71) and transverse webs (37, 57, 81, 91) and, as the case may be, cut-to measure separating walls (43, 63) as well as at least one closure element (31) for the extensive closure of an opening formed between two posts.

## Revendications

1. Profilé de montant (11, 51, 53, 71) pour des montants qui doivent être reliés avec des étais transversaux (37, 57, 81, 91), avec au moins une première latte de fixation (par exemple 15, 55) et une seconde latte de fixation (par exemple 35) qui y sont formées, parallèlement à l'axe longitudinal du profilé, lesquelles lattes de fixation (15, 35, 55) se trouvent l'une par rapport à l'autre dans un angle qui divise 360° en nombres entiers, en particulier un angle de 90 degrés, et qui permettent une fixation réglable parallèlement à l'axe longitudinal du profilé d'un étai transversal (37, 57, 81, 91) sur un côté de fixation de la latte de fixation, une perpendiculaire au côté de fixation étant orientée respectivement transversalement par rapport au sens longitudinal d'un étai transversal (37, 57, 81, 91) qui doit y être fixé, **caractérisé en ce que** les lattes de fixation (15, 35, 55) permettent une fixation réglable en continu parallèlement à l'axe longitudinal du profilé et que respectivement une butée frontale (25, 39) est configurée sur le profilé de montant parallèlement aux lattes de fixation (15, 35, 55) pour faire buter un côté frontal (87) d'un étai transversal (37, 57, 81, 91) de telle manière que respectivement un étai transversal (37, 57, 81, 91) est fixé sur chacune des deux lattes de fixation (15, 35, 55) à la même hauteur et peut buter avec son côté frontal (87) contre la butée frontale respective (25, 39).

2. Profilé de montant selon la revendication 1, **caractérisé par** au moins une gorge d'emboîtement (41, 61) pour emboîter une paroi de séparation (43, 63) dans le profilé de montant, laquelle gorge d'emboîtement (41, 61) est orientée de telle manière qu'une paroi de séparation (43, 63) qui y est emboîtée se trouve parallèlement à un étai transversal (37, 57, 81, 91) qui est fixé à une latte de fixation (35, 55).

3. Profilé de montant selon la revendication 2, **caractérisé en ce que** la gorge d'emboîtement (41, 61) est placée sur le côté de la latte de fixation (35, 55) qui est opposé au côté de fixation au voisinage direct de celle-ci.

4. Profilé de montant selon l'une des revendications 1 à 3, **caractérisé par** une section de profilé avec au moins une ouverture (47) dimensionnée pour emboîter un plat (49) dans le sens longitudinal du profilé dans une extrémité du profilé.

5. Profilé de montant selon la revendication 4, **caractérisé en ce qu'**au moins une nervure, qui est déformable par l'emboîtement du plat, est configurée dans cette ouverture.

6. Profilé de montant selon l'une des revendications 1 à 5, **caractérisé en ce que** la latte de fixation (15, 35, 55) est formée par une gorge en forme de C.

7. Profilé de montant selon l'une des revendications 1 à 6, **caractérisé en ce qu'**une paroi coudée (49) est configurée entre deux lattes de fixation (35, 55), paroi coudée qui forme avec son côté convexe des butées frontales (39) pour des étais transversaux (37, 57, 81, 91) fixés à ces lattes de fixation (35, 55).

8. Profilé de montant selon l'une des revendications 1 à 6, **caractérisé en ce qu'**une partie de profilé (26) qui fait saillie sur le devant par un côté de fixation d'une latte de fixation côté frontal (15) forme la butée frontale (25) pour un étai transversal fixé à cette latte de fixation côté frontal (15), en particulier pour un élément de socle (23) et un élément de linteau, et que l'autre butée frontale (39) est configurée sur le profilé de montant (11, 51) sur le côté de cette latte de fixation côté frontal (15) qui est opposé au côté de fixation.

9. Profilé de montant selon la revendication 8, **caractérisé en ce qu'**une gorge (27) est configurée pour un profilé d'étanchéité entre la latte de fixation côté frontal (15) et la butée frontale (25) formée par la partie de profilé côté frontal (26).

10. Profilé de montant selon l'une des revendications 1 à 9 en relation avec la revendication 2, **caractérisé en ce qu'**au moins une gorge d'emboîtement (41, 61) est configurée pour une paroi de séparation de manière périphérique sur le profilé (11, 53, 71) de telle manière qu'une paroi de séparation plane qui y est emboîtée est orientée parallèlement au sens d'un étai transversal fixé au profilé.

11. Profilé de montant selon l'une des revendications 1 à 10 en relation de la revendication 2, **caractérisé en ce que** le profilé (51, 51', 71, 71') est configuré substantiellement symétrique miroir et qu'une gorge d'emboîtement est configurée sur le plan de symétrie.

12. Set de profilés de montant avec au moins deux profilés différents (11, 51) avec au moins une première latte de fixation (par exemple 15, 55) et une seconde latte de fixation (par exemple 35) qui y sont formées, parallèlement à l'axe longitudinal du profilé, lesquelles lattes de fixation (15, 35, 55) se trouvent l'une par rapport à l'autre dans un angle qui divise 360° en nombres entiers, en particulier un angle de 90 degrés, et qui permettent une fixation réglable parallèlement à l'axe longitudinal du profilé d'un étai transversal (37, 57, 81, 91) sur un côté de fixation de la latte de fixation, une perpendiculaire au côté de fixation étant orientée respectivement transversalement par rapport au sens longitudinal d'un étai transversal (37, 57, 81, 91) qui doit y être fixé et transversalement par rapport à l'axe longitudinal du profilé, **caractérisé en ce que** les lattes de fixation (15, 35, 55) permettent une fixation par serrage réglable en continu parallèlement à l'axe longitudinal du profilé et que respectivement une butée frontale (25, 39) est configurée sur le profilé de montant parallèlement aux lattes de fixation (15, 35, 55) pour faire buter un côté frontal (87) d'un étai transversal (37, 57, 81, 91) de telle manière que respectivement un étai transversal (37, 57, 81, 91) est fixé sur chacune des deux lattes de fixation (15, 35, 55) à la même hauteur et peut buter avec son côté frontal (87) contre la butée frontale respective (25, 39), une partie de profilé côté frontal (26) formant la butée frontale (25) pour un étai transversal (91) qui doit être fixé sur une latte de fixation côté frontal (15) et l'autre butée frontale (39) étant configurée sur le côté de cette latte de fixation côté frontal (15) qui est opposé au côté de fixation et que, pour un premier profilé (11), une latte de fixation (15) est configurée uniquement d'un côté sur la partie de profilé (26) qui forme la butée frontale côté frontal (25) et que, pour le second profilé (51), deux lattes de fixation (15, 15') sont configurées symétriquement des deux côtés sur la partie de profilé (26) qui forme la butée frontale côté frontal.

13. Set de profilés de montant selon la revendication 12, **caractérisé par** un troisième profilé de montant (53) avec deux lattes de fixation (35, 55) qui présente, entre les deux lattes de fixation (35, 55), une paroi coudée (59) qui forme avec son côté convexe des butées frontales (39) pour des étais transversaux (37, 57, 81, 91) fixés à ces lattes de fixation (35, 55) et par un quatrième profilé de montant (71) correspondant à un troisième profilé de montant (53) doublé substantiellement en symétrie miroir avec une troisième latte de fixation supplémentaire (35') et une quatrième latte de fixation supplémentaire (55') sur une seconde paroi coudée (59'), lesquelles lattes de fixation supplémentaires (35', 55') et laquelle seconde paroi coudée (59') sont placées symétriques miroir par rapport aux deux premières lattes de fixation (35, 55) et à la première paroi coudée (59).

14. Set de construction constitué par un jeu de profilés de montant selon l'une des revendications 12 ou 13, de profilés pour fabriquer des étais transversaux (37, 57, 81, 91) et des moyens de fixation (19, 21) pour fixer les étais transversaux (37, 57, 81, 91) sur les profilés de montant (11, 51, 53, 71).

15. Set de construction selon la revendication 14, **caractérisé par** des montants (11, 51, 53, 71) et des étais transversaux (37, 57, 81,91) raccourcis et éventuellement par des parois de séparation (43, 63) découpées sur mesure ainsi qu'au moins un élément de fermeture (31) pour fermer autant que possible une ouverture formée entre deux montants.
